# EUROPÄISCHE PATENTSCHRIFT

(11) **EP 1 609 532 B1**
(45) Veröffentlichungstag und Bekanntmachung des Hinweises auf die Patenterteilung: **29.10.2008**
(21) Anmeldenummer: 05008403.7
(22) Anmeldetag: 18.04.2005
(51) Int. Cl.: B05B 13/04, B05B 13/02

(54) **Lackieranlage und zugehöriges Betriebsverfahren**
Painting installation and corresponding operating process
Installation de peinture et procédé de fonctionnement

(30) Priorität: 25.06.2004 DE 102004030858; 23.11.2004 DE 102004056493
(43) Veröffentlichungstag der Anmeldung: 28.12.2005
(73) Patentinhaber: Dürr Systems GmbH, 70435 Stuttgart (DE)
(72) Erfinder: Meissner, Alexander, 70193 Stuttgart (DE)
(74) Vertreter: Beier, Ralph

(56) Entgegenhaltungen:
- EP-A- 0 192 338
- WO-A-20/04037430
- FR-A- 2 806 012
- PATENT ABSTRACTS OF JAPAN Bd. 014, Nr. 030 (C-678), 19. Januar 1990 (1990-01-19) & JP 01 266870 A (TOKICO LTD), 24. Oktober 1989 (1989-10-24)

## Beschreibung

Die Erfindung betrifft eine Beschichtungsanlage und ein zugehöriges Betriebsverfahren, insbesondere zur Lackierung von Kraftfahrzeugkarosserieteilen, gemäß dem Oberbegriff der nebengeordneten Ansprüche.

Aus WO 01/68267 A1 ist eine Lackieranlage zur Lackierung von Kraftfahrzeugkarosserieteilen bekannt, bei der die Kraftfahrzeugkarosserieteile auf einer Lackierstraße nacheinander durch mehrere hintereinander angeordnete Lackierzonen befördert werden. Beiderseits der Lackierstraße befinden sich hierbei zwei übereinander angeordnete Linearführungen, wobei die obere Linearführung mehrere in Längsrichtung der Linearführung verschiebbare Handhabungsroboter (z.B. Haubenöffner oder Türöffner) trägt, während die untere Linearführung mehrere in Längsrichtung der Linearführung verfahrbare Applikationsroboter trägt.

Vorteilhaft an dieser bekannten Lackieranlage ist die Tatsache, dass die Handhabungsroboter einerseits und die Applikationsroboter andererseits ohne wechselseitige Störung in Längsrichtung positioniert werden können, da die beiden verschiedenen Robotertypen jeweils einer der beiden Linearführungen zugeordnet sind.

Nachteilig an dieser bekannten Lackieranlage mit einer getrennten Führung der Applikationsroboter einerseits und der Handhabungsroboter andererseits ist jedoch die Tatsache, dass eine Störung der Verfahrbarkeit eines Applikations- oder Handhabungsroboters und ein daraus resultierender Stillstand des jeweiligen Applikations- bzw. Handhabungsroboters zu einer erheblichen Einschränkung der Applikations- bzw. Handhabungsbereitschaft der betroffenen Lackierzelle führt, da der ausgefallene Applikations- bzw. Handhabungsroboter benachbarte Roboter des gleichen Robotertyps (Applikationsroboter oder Handhabungsroboter) blockiert, so dass diese die Störung nicht kompensieren können.

Aus EP 0 192 338, FR 2 806 012, WO 2004/037430, EP 1 263 535 B1, US 4 342 535, EP 0 745 429 A1 und EP 0 421 791 B1 sind Lackieranrichtungen bekannt, bei denen jedoch ebenfalls ein Ausfall eines Applikations- bzw. Handhabungsroboters zu einer entsprechenden Beschränkung führt.

Aus JP 01 266870 ist ferner eine Lackieranlage bekannt, die einen fehlertoleranten Betrieb von Applikationsrobotern in eine Lackieranlage ermöglicht, indem bei einem Ausfall eines Applikationsroboters ein benachbarter Applikationsroboter auf einer anderen Linearführung die Funktion des ausgefallenen Applikationsroboters übernimmt. Diese Lackieranlage weist jedoch keine Handhabungsroboter auf und sieht deshalb auch keine Fehlerkompensation für Handhabungsroboter vor.

Der Erfindung liegt also die Aufgabe zugrunde, die Störsicherheit bei der eingangs beschriebenen bekannten Lackieranlage zu erhöhen.

Diese Aufgabe wird durch die Merkmale der unabhängigen Ansprüche gelöst.

Die Erfindung umfasst die allgemeine technische Lehre, die Applikationsroboter einerseits und die Handhabungsroboter (z.B. Haubenöffner oder Türöffner) andererseits nicht an derselben Linearführung anzuordnen, um bei einem Ausfall eines Handhabungs- oder Applikationsroboters zu vermeiden, dass dieser die anderen, noch funktionsfähigen Roboter des gleichen Robotertyps blockiert und dadurch verhindert, dass die funktionsfähigen Roboter benachbarter Lackierzellen die Funktion des ausgefallenen Roboters übernehmen. Stattdessen sieht die Erfindung vor, dass jede der Linearführungen sowohl Applikationsroboter als auch Handhabungsroboter führt, so dass bei einem Ausfall eines Applikations- oder Handhabungsroboters einer Linearführung die Möglichkeit besteht, dass ein Applikations- bzw. Handhabungsroboter der anderen Linerführung die Funktion des ausgefallenen Roboters übernimmt, so dass die erfindungsgemäße Beschichtungsanlage fehlertolerant ist.

Bei einer Beschichtungsanlage mit zwei Linearführungen führt also jede der beiden Linearführungen mindestens einen der Applikationsroboter und mindestens einen der Handhabungsroboter.

Erfindungsgemäß weist die Beschichtungsanlage zwei Linearführungen auf, die einseitig oder beidseitig der Lackierstraße angeordnet sein können, wobei die Linearführungen vorzugsweise übereinander angeordnet sind und vorzugsweise parallel zueinander verlaufen.

Der im Rahmen der Erfindung verwendete Begriff eines Applikationsroboters ist allgemein zu verstehen und nicht auf mehrachsige Roboter im engeren Sinne beschränkt. Vielmehr umfasst der Begriff eines Applikationsroboters im Rahmen der Erfindung auch Vorrichtungen, die eine automatisierte Applikation eines Beschichtungsmittels ermöglichen, ohne mehrere bewegliche Achsen aufzuweisen. Vorzugsweise handelt es sich bei dem Applikationsroboter im Rahmen der Erfindung jedoch um einen mehrachsigen Roboter mit einer hochbeweglichen Roboterhandachse, die als Applikationsgerät beispielsweise einen Rotationszerstäuber trägt.

Bei dem Handhabungsroboter kann es sich beispielsweise um einen an sich bekannten Haubenöffner oder einen ebenfalls an sich bekannten Türöffner handeln, jedoch ist die Erfindung nicht auf derartige Ausführungsformen für den Handhabungsroboter beschränkt.

Weiterhin ist zu erwähnen, dass die Erfindung nicht auf Lackieranlagen beschränkt ist, sondern allgemein Beschichtungsanlagen umfasst, bei denen ein Beschichtungsmittel (z.B. Grundierung, Füller, Basislack, Klarlack, Transportwachs) aufgetragen wird.

Durch die auf die verschiedenen Linearführungen verteilte Anordnung der Applikationsroboter einerseits und der Handhabungsroboter andererseits führt ein störungsbedingter Stillstand eines Applikationsroboters nicht zur Blockierung sämtlicher Roboter des gleichen Typs, da die an der anderen Linearführung geführten Applikations- bzw. Handhabungsroboter durch den Ausfall nicht gestört werden. Dadurch besteht vorteilhaft die Möglichkeit, dass der Ausfall eines Roboters der einen Linearführung durch einen funktionsfähigen, typgleichen Roboter der anderen Linearführung ausgeglichen wird.

Hierbei können die Applikations- bzw. Handhabungsroboter der einen Linearführung die Applikations- bzw. Handhabungsroboter der anderen Linearführung in Längsrichtung passieren. Dies bietet den Vorteil, dass ein störungsbedingter Stillstand eines Roboters der einen Linearführung die Bewegung der Roboter der anderen Linearführung nicht behindert.

In einem bevorzugten Ausführungsbeispiel der Erfindung sind an den einzelnen Linearführungen jeweils in Längsrichtung abwechselnd hintereinander Handhabungsroboter und Applikationsroboter angeordnet. Dies bietet den Vorteil, dass bei einem Ausfall eines Roboters der durchschnittliche Abstand zum nächsten typgleichen Roboter der anderen Linearführung minimal ist.

Vorzugsweise weist die erfindungsgemäße Beschichtungsanlage mehrere hintereinander angeordnete Beschichtungszonen auf, durch die die Linearführungen hindurch laufen, wobei in den einzelnen Beschichtungszonen jeweils mindestens ein Handhabungsroboter und mindestens ein Applikationsroboter angeordnet ist. Bei einem Funktionsausfall eines Handhabungs- oder Applikationsroboters in einer Beschichtungszone kann dann ein typgleicher Roboter aus einer benachbarten Beschichtungszone zu Hilfe gerufen werden, um den Funktionsausfall auszugleichen.

In den einzelnen Beschichtungszonen ist der Handhabungsroboter vorzugsweise an der einen Linearführung angebracht, während der Applikationsroboter an der anderen Linearführung geführt wird, wobei die Zuordnung von Handhabungsroboter und Applikationsroboter zu den Linearführungen zwischen den einzelnen Beschichtungszellen wechseln kann.

Es besteht jedoch alternativ auch die Möglichkeit, dass der Handhabungsroboter und der Applikationsroboter in den einzelnen Beschichtungszonen jeweils an derselben Linearführung angebracht sind, wobei die jeweilige Linearführung von Beschichtungszone zu Beschichtungszone wechselt. Beispielsweise besteht die Möglichkeit, dass der Handhabungsroboter und der Applikationsroboter in einer Beschichtungszone an der oberen Linearführung angebracht sind, während der Handhabungsroboter und der Applikationsroboter in der benachbarten Beschichtungszone an der unteren Linearführung angeordnet sind.

In einer Variante der Erfindung weist die Beschichtungsanlage einen Transportweg auf, entlang dem das Applikationsobjekt (z.B. eine Kraftfahrzeugkarosserie) durch die Beschichtungsanlage transportiert wird, wobei die Linearführungen für den Handhabungs- bzw. Applikationsroboter oberhalb des Transportwegs und/oder oberhalb des Applikationsobjekts angeordnet sind. Der Handhabungs- bzw. Applikationsroboter ruht hierbei also nicht auf dem Fundament der Beschichtungsanlage, sondern ist nach oben versetzt. Diese Anordnung hat sich in der Praxis als strömungstechnisch günstiger erwiesen, wodurch der Auftragswirkungsgrad erhöht und das sogenannte Overspray verringert wird.

Die erhöhte Anordnung der Linearführungen kann beispielsweise durch Standbeine realisiert werden, durch welche die Linearführungen gegenüber dem Fundament nach oben versetzt sind. Es ist jedoch alternativ auch möglich, den Applikations- bzw. Handhabungsroboter an der Seitenwand der Lackierzelle zu befestigen, so dass keine Standbeine erforderlich sind.

Zur Optimierung des Strömungsverhaltens ist der in Längsrichtung zwischen den Standbeinen liegende Raum hierbei vorzugsweise in seitlicher Richtung strömungsdurchlässig, was zu der bereits vorstehend erwähnten Verbesserung des Auftragswirkungsgrades und zur Minimierung des sogenannten Oversprays beiträgt.

In einem bevorzugten Ausführungsbeispiel der Erfindung weist die Beschichtungsanlage mindestens einen kastenförmigen, langgestreckten Profilträger mit mehreren Seitenwänden auf, wobei die Linearführungen an den Seitenwänden des Profilträgers angeordnet sind. Beispielsweise kann der Profilträger ein Rechteckprofil aufweisen, wobei die dem Transportweg zugewandte Seitenwand des Profilträgers eine Linearführung bildet, während die untere Seitenwand des Profilträgers die andere Linearführung bildet. Durch diese Anordnung mehrerer Linearführungen an jeweils einem Profilträger werden Bauraum, Gewicht und Materialaufwand für die Linearführungen verringert.

Weiterhin besteht die Möglichkeit, dass auf beiden Seiten des Transportweges für das Applikationsobjekt (z.B. eine Kraftfahrzeugkarosserie) jeweils mindestens zwei Linearführungen angeordnet sind, wobei jede der Linearführungen mindestens einen der Applikationsroboter und mindestens einen der Handhabungsroboter führt. Jede Seite der Lackierzelle weist hierbei also eine erhöhte Störsicherheit gegenüber einem Ausfall eines der Applikations- bzw. Handhabungsroboter auf.

Ferner besteht die Möglichkeit, dass die auf den gegenüber liegenden Seiten des Transportweges angeordneten Linearführungen durch mindestens eine Querstrebe miteinander verbunden sind, wobei die Querstrebe vorzugsweise oberhalb des Transportwegs und/oder oberhalb des Applikationsobjekts verläuft. Das Applikationsobjekt kann hierbei also entlang dem Transportweg unter den Querstreben hindurch geführt werden.

Weiterhin ist es vorteilhaft, wenn die einzelnen Linearführungen zumindest paarweise vormontiert sind, wodurch die Montagezeiten und damit auch die Stillstandszeiten der betroffenen Beschichtungsanlage minimiert werden.

Darüber hinaus umfasst die Erfindung auch ein Betriebsverfahren für die erfindungsgemäße Beschichtungsanlage, bei dem an den einzelnen Linearführungen der Beschichtungsanlage jeweils mindestens einer der Applikationsroboter und mindestens einer der Handhabungsroboter geführt wird, um eine Fehlertoleranz zu ermöglichen, wie vorstehend beschrieben wurde.

Andere vorteilhafte Weiterbildungen sind in den Unteransprüchen gekennzeichnet oder werden nachstehend zusammen mit der Beschreibung der bevorzugten Ausführungsbeispiele der Erfindung anhand der Figuren näher erläutert.

### Es zeigen:

- Figur 1: eine Perspektivansicht einer erfindungsgemäßen Lackieranlage auf einer Seite einer Lackier- straße,
- Figur 2: eine Frontansicht der Lackieranlage aus Figur 1,
- Figur 3: eine Draufsicht der Lackieranlage aus Figur 1,
- Figuren 4a-4c: schematische Darstellungen einer erfindungsge- mäßen Beschichtungsanlage bei fehlerfreiem Be- trieb bzw. beim Ausfall eines Roboters,
- Figuren 5a-5c: weitere schematische Darstellungen einer erfin- dungsgemäßen Beschichtungsanlage bei fehler- freiem Betrieb bzw. beim Ausfall eines Roboters sowie
- Figuren 6A-6C: verschiedene Ansichten einer erfindungsgemäßen Lackierzelle einer Beschichtungsanlage.

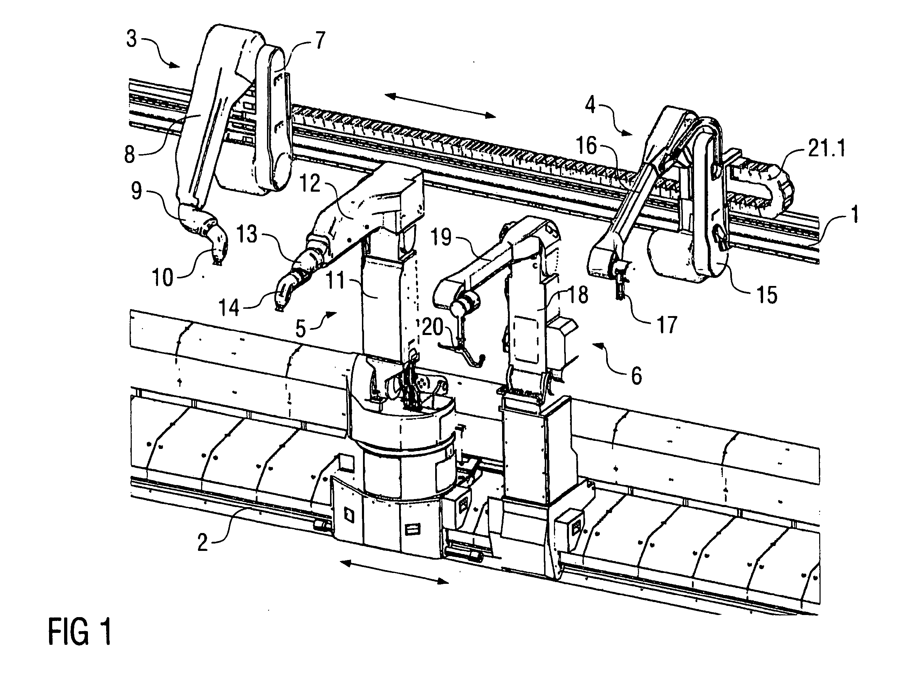

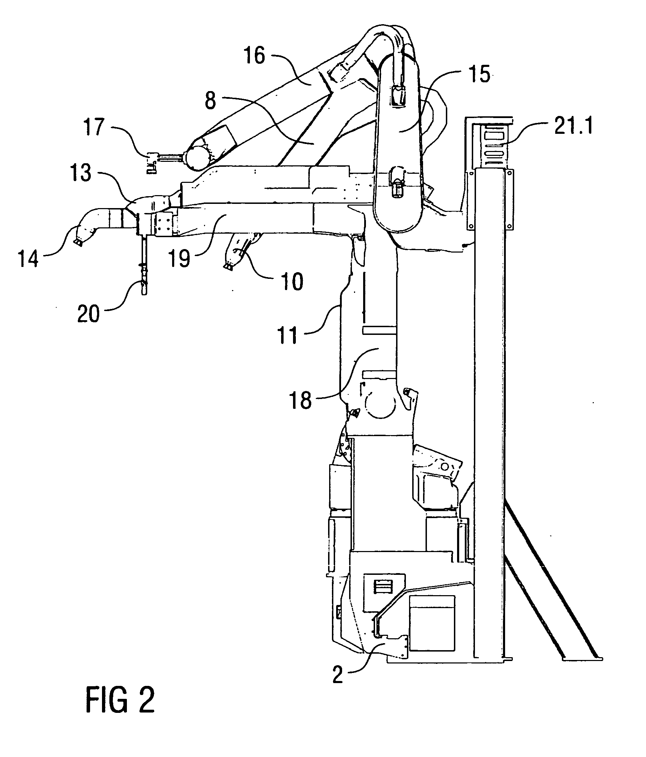

Die Perspektivansichten in den Figuren 1 bis 3 zeigen eine erfindungsgemäße Lackieranlage auf einer Seite einer Lackierstraße, wobei die Lackierstraße selbst und die gegenüber liegende Seite der Lackieranlage zur Vereinfachung nicht dargestellt ist.

Die Lackieranlage weist zwei übereinander angeordnete und parallel verlaufende Linearführungen 1, 2 auf, wobei die obere Linearführung 1 einen Lackierroboter 3 und einen Handhabungsroboter 4 in Pfeilrichtung verschiebbar führt, während die untere Linearführung 2 einen Lackierroboter 5 und einen Handhabungsroboter 6 in Pfeilrichtung verschiebbar führt.
Der Lackierroboter 3 ist weitgehend herkömmlich aufgebaut und weist mehrere Roboterarme 7, 8 und eine Roboterhandachse 9 auf, die einen Rotationszerstäuber 10 trägt.

Auch der Lackierroboter 5 ist weitgehend herkömmlich aufgebaut und weist mehrere Roboterarme 11, 12 und eine Roboterhandachse 13 auf, die einen Rotationszerstäuber 14 trägt.

Bei dem Handhabungsroboter 4 handelt es sich um einen weitgehend herkömmlich aufgebauten Türöffner, der bei unlackierten Kraftfahrzeugkarosserien die Fahrzeugtüren für den Lackierprozess öffnet. Der Handhabungsroboter 4 weist hierzu mehrere Roboterarme 15, 16 und einen schwenkbaren Griff 17 auf. Darüber hinaus verfügt der Handhabungsroboter 4 auch über eine Handachse, die einachsig ausgeführt ist.

Bei dem Handhabungsroboter 6 handelt es sich dagegen um einen weitgehend herkömmlich aufgebauten Haubenöffner, der bei einer unlackierten Kraftfahrzeugkarosserie während des Lackiervorgangs eine Motor- oder Kofferraumhaube öffnet. Hierzu weist der Handhabungsroboter 6 mehrere Roboterarme 18, 19 und einen entsprechend angepassten Griff 20 auf. Darüber hinaus verfügt auch der Handhabungsroboter 6 über eine Handachse, die einachsig ausgeführt ist.

Der Lackierroboter 3 und der Handhabungsroboter 4 an der oberen Linearführung 1 werden durch zwei getrennte Versorgungsleitungen 21.1, 21.2 versorgt, wobei in Figur 1 nur die Versorgungsleitung 21.1 dargestellt ist. Der Lackierroboter 3 und der Handhabungsroboter 4 sind hierbei in Pfeilrichtung verschiebbar.

Auch der Lackierroboter 5 und der Handhabungsroboter 6 an der unteren Linearführung 2 sind in Pfeilrichtung verschiebbar, was bei einem Ausfall des Lackierroboters 5 oder des Lackierroboters 3 ermöglicht, dass der jeweils andere Lackierroboter 3 bzw. 5 für den ausgefallenen Lackierroboter 3 bzw. 5 einspringt, wodurch die erfindungsgemäße Lackieranlage fehlertoleranter wird.

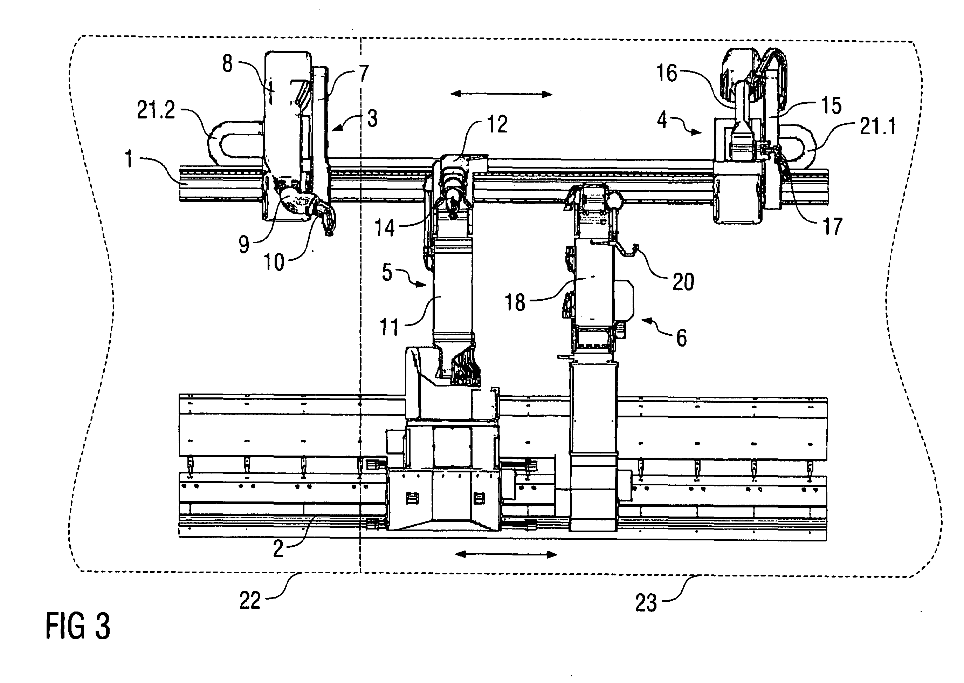

Aus Figur 3 ist weiterhin ersichtlich, dass die erfindungsgemäße Lackieranlage mehrere in Längsrichtung der beiden Linearführungen 1, 2 hintereinander angeordnete Lackierzonen aufweist, wobei zur Vereinfachung nur zwei Lackierzonen 22, 23 dargestellt sind. Bei einem Ausfall des Lackierroboters 3 in der Lackierzone 22 kann dann der Lackierroboter 5 aus der Lackierzone 23 zu Hilfe gerufen werden. Der Lackierroboter 5 wird dann in Pfeilrichtung aus der Lackierzone 23 in die Lackierzone 22 an den Platz des defekten Lackierroboters 3 gefahren, wo er dessen Funktion vorübergehend übernimmt. Auf diese Weise erfolgt lackierzonenübergreifend eine Fehlerkompensation, wodurch ein fehlertolerantes System geschaffen wird.

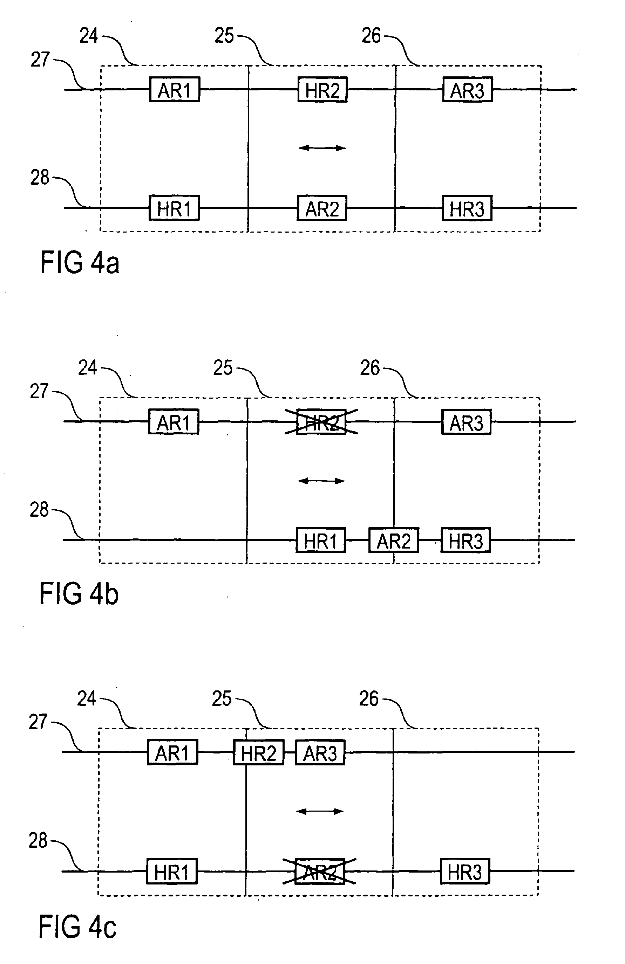

Die Figuren 4a bis 4c zeigen schematische Darstellungen einer erfindungsgemäßen Beschichtungsanlage mit mehreren Beschichtungszonen 24, 25, 26, durch die zwei übereinander angeordnete und parallel verlaufende Linearführungen 27, 28 verlaufen.

Die obere Linearführung 27 führt in Längsrichtung abwechselnd einen Applikationsroboter AR1, einen Handhabungsroboter HR2 und einen Applikationsroboter AR3, während die untere Linearführung 28 abwechselnd einen Handhabungsroboter HR1, einen Applikationsroboter AR2 und einen Handhabungsroboter HR3 in Pfeilrichtung verschiebbar führt.

Bei dem in Figur 4a dargestellten fehlerfreien Betrieb ist in jeder der Beschichtungszonen 24-26 jeweils ein Applikationsroboter AR1, AR2 bzw. AR3 und ein Handhabungsroboter HR1, HR2 bzw. HR3 angeordnet, die jeweils paarweise zusammen wirken.

Figur 4b zeigt dagegen einen Fehlerzustand, bei dem der Handhabungsroboter HR2 in der Beschichtungszone 25 ausgefallen ist und in Pfeilrichtung nicht mehr verschoben werden kann. In einem solchen Fehlerfall wird der Handhabungsroboter HR1 aus der Beschichtungszone 24 vorübergehend in die Beschichtungszone 25 mit dem defekten Handhabungsroboter HR2 verfahren und übernimmt dort vorübergehend dessen Funktion.

Figur 4c zeigt dagegen einen Fehlerfall, in dem der Applikationsroboter AR2 der Beschichtungszone 25 störungsbedingt ausgefallen ist und nicht mehr in Pfeilrichtung verfahren werden kann. In diesem Fehlerfall wird der Applikationsroboter AR3 aus der Beschichtungszone 26 in die Beschichtungszone 25 mit dem ausgefallenen Applikationsroboter AR2 gefahren und übernimmt dort vorübergehend dessen Funktion.

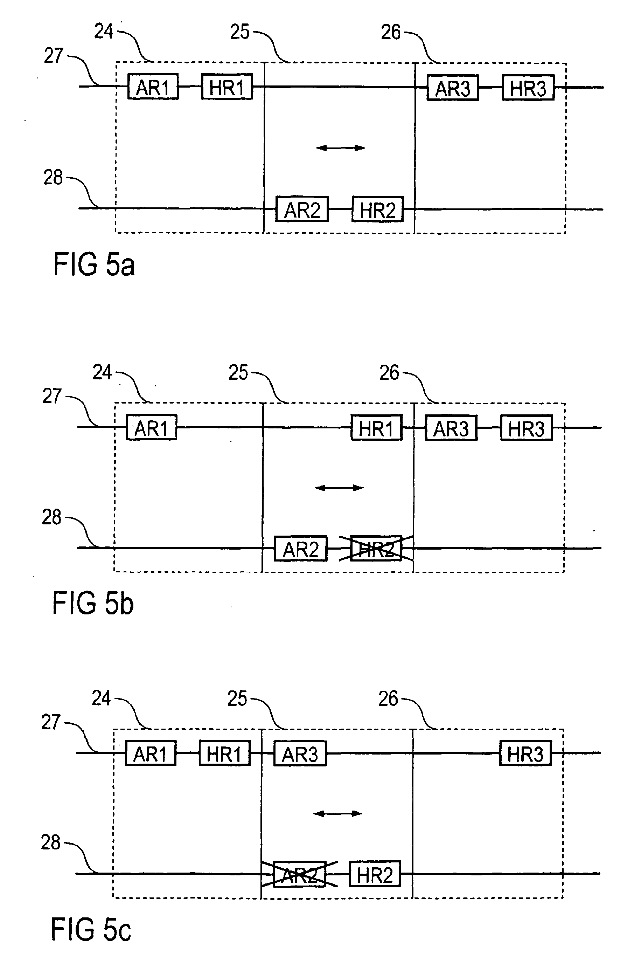

Das in den Figuren 5a bis 5c dargestellte Ausführungsbeispiel einer erfindungsgemäßen Beschichtungsanlage stimmt weitgehend mit dem vorstehend beschriebenen und in den Figuren 4a bis 4c dargestellten Ausführungsbeispiel überein, so dass zur Vermeidung von Wiederholungen auf die vorstehende Beschreibung verwiesen wird, wobei für entsprechende Bauteile bzw. Baugruppen dieselben Bezugszeichen verwendet werden.

Eine Besonderheit dieses Ausführungsbeispiels besteht darin, dass in jeder der Beschichtungszonen 24-26 jeweils ein Paar eines Applikationsroboters AR1, AR2 bzw. AR3 und eines Handhabungsroboters HR1, HR2 bzw. HR3 an derselben Linearführung 27 bzw. 28 angeordnet ist. Die beiden Robotertypen (Handhabungsroboter bzw. Applikationsroboter) sind hierbei also innerhalb der einzelnen Beschichtungszonen 24-26 jeweils an derselben Linearführung 27 bzw. 28 angeordnet, wobei die benutzte Linearführung 27 bzw. 28 zwischen den einzelnen Beschichtungszonen 24-26 wechselt.

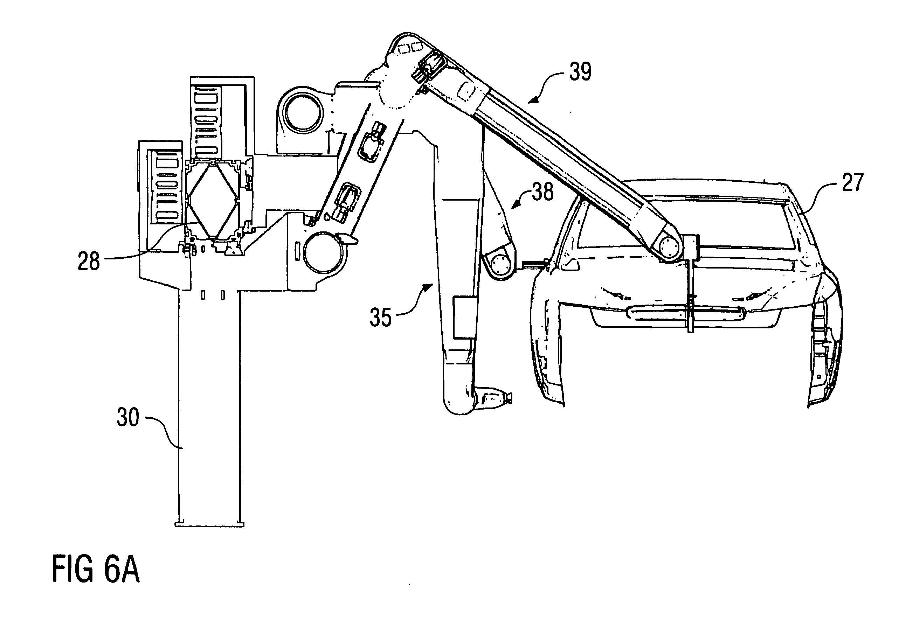

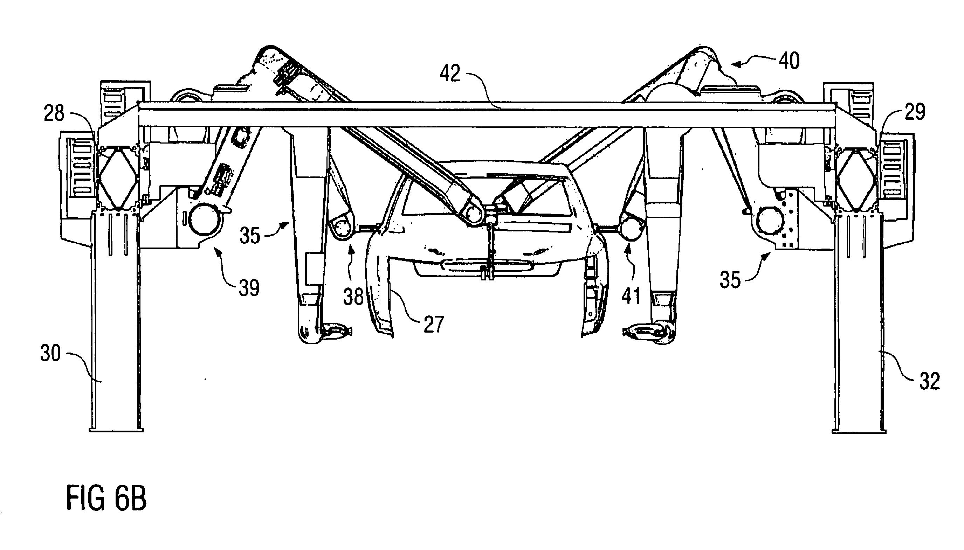

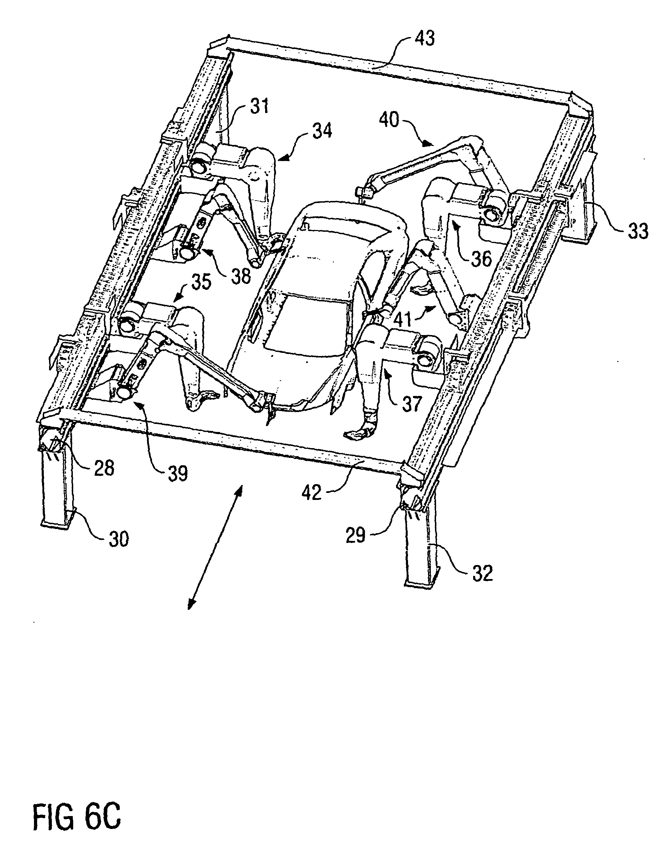

Die Figuren 6A bis 6C zeigen verschiedene Ansichten einer erfindungsgemäßen Lackierzelle einer Beschichtungsanlage zur Beschichtung von Kraftfahrzeugkarosserien, wobei in den Zeichnungen nur eine einzige Kraftfahrzeugkarosserie 27 dargestellt ist. Die Kraftfahrzeugkarosserie 27 wird hierbei in Pfeilrichtung in Fig. 6C entlang einem Transportweg durch die Beschichtungsanlage transportiert und dabei beschichtet.

Auf beiden Seiten des Transportwegs ist jeweils ein kastenförmiger, langgestreckter Profilträger 28, 29 mit einem Rechteckprofil angeordnet, wobei die Seitenwände der beiden Profilträger 28, 29 jeweils Linearführungen bilden, wie noch detailliert beschrieben wird.

Die Profilträger 28, 29 sind durch Standbeine 30-33 gegenüber dem Fundament nach oben versetzt, so dass die Profilträger 28, 29 und damit auch die Linearführungen oberhalb des Transportwegs und teilweise sogar oberhalb der Kraftfahrzeugkarosserie 27 verlaufen, was strömungstechnisch günstig ist, wie ebenfalls noch detailliert beschrieben wird.

Die dem Transport zugewandten Seitenflächen der Profilträger 28, 29 bilden jeweils eine Linearführung für Applikationsroboter 34-37, während die Unterseiten der Profilträger 28, 29 jeweils eine Linearführung für Handhabungsroboter 38-41 bilden.

Die beiden Handhabungsroboter 38, 39 werden also von der einen Linearführung an dem Profilträger 28 geführt, während die beiden Applikationsroboter 34, 35 von der anderen Linearführung an dem Profilträger 28 geführt werden.

Auf der gegenüberliegenden Seite des Transportweges werden entsprechend die beiden Handhabungsroboter 40, 41 von der einen Linearführung an dem Profilträger 29 geführt, wohingegen die beiden Applikationsroboter 36, 37 von der anderen Linearführung an dem Profilträger 29 geführt werden.

Innerhalb der dargestellten Lackierzelle führt also jede der Linearführungen entweder nur Applikationsroboter oder nur Handhabungsroboter. Die eingangs beschriebene Redundanz wird hierbei dadurch erreicht, dass die Verteilung der Applikationsroboter und der Handhabungsroboter auf die verschiedenen Linearführungen von Lackierzelle zu Lackierzelle wechselt.

Die angehobene Position der Applikationsroboter 34-37 ist strömungstechnisch günstiger, da der in Längsrichtung des Transportwegs zwischen den Standbeinen 30, 31 bzw. 32, 33 liegende Raum in seitlicher Richtung strömungsdurchlässig ist, was in der Praxis zu einem verbesserten Auftragswirkungsgrad führt und den sogenannten Overspray verringert.

Im fertig montierten Zustand sind die Profilträger 28 und 29 an beiden Enden der Lackierzelle durch jeweils eine Querstrebe 42, 43 miteinander verbunden, wobei die Kraftfahrzeugkarosserie 27 unter den Querstreben 42, 43 hindurch transportiert werden kann, so dass diese nicht stören.

Ferner ist zu erwähnen, dass der Profilträger 28 mit den Standbeinen 30, 31 den Applikationsrobotern 34, 35 und den Handhabungsrobotern 38, 39 als Modul vormontiert werden kann. In gleicher Weise kann selbstverständlich auch der Profilträger 29 mit den Standbeinen 32, 33, den Applikationsrobotern 36, 37 und den Handhabungsrobotern 40, 41 als Modul vorgefertigt werden. Diese modulare Vormontage ermöglicht eine schnelle Endmontage in der betroffenen Beschichtungsanlage, wodurch die Stillstandszeiten der Beschichtungsanlage verringert werden.

Die Erfindung ist nicht auf die vorstehend beschriebenen bevorzugten Ausführungsbeispiele beschränkt. Vielmehr ist eine Vielzahl von Varianten und Abwandlungen im Rahmen des durch die Ansprüche definierten Schutzbereiches möglich.

## Patentansprüche

1. Beschichtungsanlage, insbesondere zur Lackierung von Kraftfahrzeugkarosserieteilen, mit
a) mindestens zwei Applikationsrobotern (3, 5, AR1-AR3) zur Applikation eines Beschichtungsmittels auf ein Applikationsobjekt,
b) mindestens zwei Handhabungsrobotern (4, 6, HR1-HR3) zur Handhabung des Applikationsobjekts und
c) zwei Linearführungen (1, 2), entlang derer die Handhabungsroboter (4, 6, HR1-HR3) und die Applikationsroboter (3, 5, AR1-AR3) verfahrbar sind,
d) wobei jede der beiden Linearführungen (1, 2) mindestens einen der Applikationsroboter (3, 5, AR1-AR3) und mindestens einen der Handhabungsroboter (4, 6, HR1-HR3) führt,
e) während die Applikations- bzw. Handhabungsroboter (4, 6, HR1-HR3) der einen Linearführung (1, 2) die Applikations- bzw. Handhabungsroboter (4, 6, HR1-HR3) der anderen Linearführung (1, 2) in Längsrichtung passieren können,
**dadurch gekennzeichnet, dass**
f) bei einem Ausfall eines der Applikationsroboter (3, 5, AR1-AR3) oder eines der Handhabungsroboter (4, 6, HR1-HR3) einer der Linearführungen (1 bzw. 2) ein funktionsfähiger und typgleicher Applikationsroboter (3, 5, AR1-AR3) bzw. Handhabungsroboter (4, 6, HR1-HR3) der anderen Linerführung (2 bzw. 1) die Funktion des ausgefallenen Applikationsroboters (3, 5, AR1-AR3) bzw. Handhabungsroboters (4, 6, HR1-HR3) übernehmen kann.

2. Beschichtungsanlage nach Anspruch 1, **dadurch gekennzeichnet, dass** die beiden Linearführungen (1, 2) übereinander angeordnet sind.

3. Beschichtungsanlage nach einem der vorhergehenden Ansprüche, **dadurch gekennzeichnet, dass** die beiden Linearführungen (1, 2) im Wesentlichen parallel zueinander verlaufen.

4. Beschichtungsanlage nach einem der vorhergehenden Ansprüche, **dadurch gekennzeichnet, dass** die Handhabungsroboter (4, 6, HR1-HR3) Türöffner oder Haubenöffner sind.

5. Beschichtungsanlage nach einem der vorhergehenden Ansprüche, **dadurch gekennzeichnet, dass** an den beiden Linearführungen (1, 2) jeweils in Längsrichtung abwechselnd Handhabungsroboter (4, 6, HR1-HR3) und Applikationsroboter (3, 5, AR1-AR3) angeordnet sind.

6. Beschichtungsanlage nach einem der vorhergehenden Ansprüche, **dadurch gekennzeichnet, dass** die Linearführungen (1, 2) durch mehrere Beschichtungszonen (22-26) verlaufen, wobei in den einzelnen Beschichtungszonen (22-26) jeweils mindestens ein Handhabungsroboter (4, 6, HR1-HR3) und mindestens ein Applikationsroboter (3, 5, AR1-AR3) angeordnet ist.

7. Beschichtungsanlage nach Anspruch 6, **dadurch gekennzeichnet, dass** der Handhabungsroboter (4, 6, HR1-HR3) und der Applikationsroboter (3, 5, AR1-AR3) in den einzelnen Beschichtungszonen (22-26) jeweils an verschiedenen Linearführungen (1, 2) angebracht sind.

8. Beschichtungsanlage nach einem der vorhergehenden Ansprüche, **gekennzeichnet durch** einen Transportweg zum Transport des Applikationsobjekts (27) **durch** die Beschichtungsanlage, wobei die Linearführungen (28,29) oberhalb des Transportwegs und/oder oberhalb des Applikationsobjekts (27) angeordnet sind.

9. Beschichtungsanlage nach einem der vorhergehenden Ansprüche, **dadurch gekennzeichnet, dass** die Linearführungen (28, 29) durch Standbeine (30-33) gegenüber einem Fundament nach oben versetzt sind.

10. Beschichtungsanlage nach Anspruch 9, **dadurch gekennzeichnet, dass** der in Längsrichtung zwischen den Standbeinen (30-33) liegende Raum in seitlicher Richtung strömungsdurchlässig ist.

11. Beschichtungsanlage nach einem der vorhergehenden Ansprüche, **gekennzeichnet durch** einen kastenförmigen, langgestreckten Profilträger (28, 29) mit mehreren Seitenwänden, wobei die Linearführungen an den Seitenwänden des Profilträgers (28, 29) angeordnet sind.

12. Beschichtungsanlage nach einem der vorhergehenden Ansprüche, **gekennzeichnet durch** einen Transportweg zum Transport des Applikationsobjekts (27) **durch** die Beschichtungsanlage, wobei auf beiden Seiten des Transportwegs jeweils mindestens zwei Linearführungen angeordnet sind, während jede der Linearführungen mindestens einen der Applikationsroboter und mindestens einen der Handhabungsroboter führt.

13. Beschichtungsanlage nach Anspruch 12, **dadurch gekennzeichnet, dass** die Linearführungen auf den beiden Seiten des Transportwegs durch mindestens eine Querstrebe (42, 43) miteinander verbunden sind.

14. Beschichtungsanlage nach Anspruch 13, **dadurch gekennzeichnet, dass** die Querstrebe (42, 43) oberhalb des Transportwegs und/oder oberhalb des Applikationsobjekts angeordnet ist.

15. Beschichtungsanlage nach einem der vorhergehenden Ansprüche, **dadurch gekennzeichnet, dass** die Linearführungen zumindest paarweise vormontiert sind.

16. Betriebsverfahren für eine Beschichtungsanlage
a) mit mindestens zwei Linearführungen (1, 2), an denen mehrere Applikationsroboter (3, 5, AR1-AR3) und mehrere Handhabungsroboter (4, 6, HR1-HR3) in Längsrichtung verfahrbar sind,
b) wobei an den beiden Linearführungen (1, 2) jeweils mindestens einer der Applikationsroboter (3, 5, AR1-AR3) und mindestens einer der Handhabungsroboter (4, 6, HR1-HR3) geführt wird,
c) wobei mindestens einer der Applikations- bzw. Handhabungsroboter (4, 6, HR1-HR3) der einen Linearführung (1, 2) an mindestens einem der Applikations- bzw. Handhabungsroboter (4, 6, HR1-HR3) der anderen Linearführung (1, 2) in Längsrichtung vorbeigefahren wird,
**gekennzeichnet durch**
d) mehrere in Längsrichtung der Linearführungen (1, 2) hintereinander angeordnete Beschichtungszonen (22-26), in denen jeweils mindestens ein Handhabungsroboter (4, 6, HR1-HR3) und mindestens ein Applikationsroboter (3, 5, AR1-AR3) angeordnet ist, wobei
e) ein Defekt eines Applikationsroboters in einer Beschichtungszone kompensiert wird, indem ein Applikationsroboter (3, 5, AR1-AR3) aus einer benachbarten Beschichtungszone in die Beschichtungszone mit dem defekten Applikationsroboter (3, 5, AR1-AR3) gefahren wird, und/oder
f) ein Defekt eines Handhabungsroboters in einer Beschichtungszone kompensiert wird, indem ein Handhabungsroboter (4, 6, HR1-HR3) aus einer benachbarten Beschichtungszone in die Beschichtungszone mit dem defekten Handhabungsroboter (4, 6, HR1-HR3) gefahren wird.

## Claims

1. Coating installation, in particular for painting motor vehicle body parts, with:
a) at least two application robots (3, 5, AR1 to AR3) for application of a coating medium on an application object;
b) at least two handling robots (4, 6, HR1 to HR3) for handling the application object, and
c) two linear guides (1, 2) along which the handling robots (4, 6, HR1 to HR3) and the application robots (3, 5, AR1 to AR3) can be driven,
d) wherein each of the two linear guides (1, 2) carries at least one of the application robots (3, 5, AR1 to AR3) and at least one of the handling robots (4, 6, HR1 to HR3).
e) whilst the application or handling robots (4, 6, HR1 to HR3) on one linear guide (1, 2) can move past the application or handling robots (4, 6, HR1 to HR3) on the other linear guide (1, 2) in the longitudinal direction
**characterised in that**
f) In the event of a breakdown of one of the application robots (3, 5, AR1 to AR3) or one of the handling robots (4, 6, HR1 to HR3) on one of the linear guides (1 or 2 respectively) an operable application robot (3, 5, AR1 to AR3) or handling robot (4, 6, HR1 to HR3) on the other linear guide (2 or 1 respectively) can take over the function of the broken-down application robot (3, 5, AR1 to AR3) or handling robot (4, 6, HR1 to HR3).

2. Coating installation as claimed in Claim 1, **characterised in that** the two linear guides (1, 2) are disposed one above the other.

3. Coating installation as claimed in any one of the preceding claims, **characterised in that** the two linear guides (1, 2) extend substantially parallel to one another.

4. Coating installation as claimed in any one of the preceding claims, **characterised in that** the handling robots (4, 6, HR1 to HR3) are door openers or bonnet openers.

5. Coating installation as claimed in any one of the preceding claims, **characterised in that** handling robots (4, 6, HR1 to HR3) and application robots (3, 5, AR1 to AR3) are disposed alternately in the longitudinal direction on the two linear guides (1, 2).

6. Coating installation as claimed in any one of the preceding claims, **characterised in that** the linear guides (1, 2) extend through a plurality of coating zones (22 to 26), wherein at least one handling robot (4, 6, HR1 to HR3) and at least one application robot (3, 5. AR1 to AR3) is disposed in each of the individual coating zones (22 to 26).

7. Coating installation as claimed in any one of the preceding claims, **characterised in that** the handling robot (4, 6, HR1 to HR3) and the application robot (3, 5, AR1 to AR3) in the individual coating zones (22 to 26) are each mounted on different linear guides (1, 2).

8. Coating installation as claimed in any one of the preceding claims, **characterised by** transport path for transport of the application object (27) through the coating installation, wherein the linear guides (28, 29) are disposed above the transport path and/or above the application object (27).

9. Coating installation as claimed in any one of the preceding claims, **characterised in that** the linear guides (28, 29) are offset upwards relative to a base plate by legs (30 to 33).

10. Coating installation as claimed in any one of the preceding claims, **characterised in that** the space available in the longitudinal direction between the legs (30 to 33) is permeable to the flow in the lateral direction.

11. Coating installation as claimed in any one of the preceding claims, **characterised by** box-like elongate profiled support (28, 29) with a plurality of side walls, wherein the linear guides are disposed on the side walls of the profiled support (28, 29).

12. Coating installation as claimed in any one of the preceding claims, **characterised by** a transport path for transport of the application object (27) through the coating installation, wherein in each case at least two linear guides are disposed on both sides of the transport path, whilst each of the linear guides carries at least one of the application robots and at least one of the handling robots.

13. Coating installation as claimed in any one of the preceding claims, **characterised in that** the linear guides on both sides of the transport path are connected to one another by at least one transverse strut (42, 43).

14. Coating installation as claimed in any one of the preceding claims, **characterised in that** the transverse strut (42, 43) is disposed above the transport path and/or above the application object.

15. Coating installation as claimed in any one of the preceding claims, **characterised in that** the linear guides are pre-assembled at least in pairs.

16. Method of operation of a coating installation
a) with at least two linear guides (1, 2) on which a plurality of application robots (3, 5, AR1 to AR3) and a plurality of handling robots (4, 6, HR1 to HR3) can be driven in the longitudinal direction,
b) wherein at least one of the application robots (3, 5, AR1 to AR3) and at least one of the handling robots (4, 6, HR1 to HR3) are carried on the two linear guides (1, 2),
c) wherein at least one of the application robots or handling robots (4, 6, HR1 to HR3) on one linear guide (1, 2) is driven past one of the application robots or handling robots (4, 6, HR1 to HR3) on the other linear guide (1, 2) in the longitudinal direction.
**characterised by**
d) a plurality of coating zones (22 to 26) which are disposed one behind the other in the longitudinal direction of the linear guides (1, 2) and in which in each case at least one handling robot (4, 6, HR1 to HR3) and at least one application robot (3, 5, AR1 to AR3) is disposed, wherein
e) a defect of an application robot in a coating zone is compensated for in that an application robot (3, 5, AR1 to AR3) from an adjacent coating zone is driven into the coating zone with a defective application robot (3, 5, AR1 to AR3), and/or
f) a defect of a handling robot in one coating zone is compensated for in that a handling robot (4, 6, HR1 to HR3) from an adjacent coating zone is driven into the coating zone with the defective handling robot (4, 6, HR1 to HR3).

## Revendications

1. Installation de peinture, en particulier pour la peinture de pièces de carrosserie automobile, comportant
a) au moins deux robots de peinture (3, 5, AR1-AR3), destinés à appliquer un produit de revêtement sur un objet,
b) au moins deux robots de manipulation (4, 6, HR1-HR3) destinés à manipuler l'objet à peindre,
c) deux guidages linéaires (1, 2), le long desquels les robots de manipulation (4, 6, HR1-HR3) et les robots de peinture (3, 5, AR1-AR3) peuvent être déplacés,
d) chacun des deux guidages linéaires (1, 2) guidant au moins un des robots de peinture (3, 5, AR1-AR3) et au moins un des robots de manipulation (4, 6, HR1-HR3),
e) tandis que les robots de peinture ou les robots de manipulation (4, 6, HR1-HR3) de l'un des guidages linéaires (1, 2) peuvent passer dans la direction longitudinale le long des robots de peinture ou des robots de manipulation (4, 6, HR1-HR3) de l'autre guidage linéaire (1, 2),
**caractérisée en ce que**
f) en cas de panne de l'un des robots de peinture (3, 5, AR1-AR3) ou de l'un des robots de manipulation (4, 6, HR1-HR3) de l'un des guidages linéaires (1 ou 2), un robot de peinture (3, 5, AR1-AR3) ou un robot de manipulation (4, 6, HR1-HR3) opérationnel et de même type sur l'autre guidage linéaire (2 ou 1) peut remplir la fonction du robot de peinture (3, 5, AR1-AR3) ou du robot de manipulation (4, 6, HR1-HR3) en panne.

2. Installation de peinture selon la revendication 1, **caractérisée en ce que** les deux guidages linéaires (1, 2) sont disposés l'un au-dessus de l'autre.

3. Installation de peinture selon l'une quelconque des revendications précédentes, **caractérisée en ce que** les deux guidages linéaires (1, 2) sont disposés sensiblement parallèlement l'un à l'autre.

4. Installation de peinture selon l'une quelconque des revendications précédentes, **caractérisée en ce que** les robots de manipulation (4, 6, HR1-HR3) sont des manipulateurs de porte ou des manipulateurs de capot.

5. Installation de peinture selon l'une quelconque des revendications précédentes, **caractérisée en ce que** sur les deux guidages linéaires (1, 2) sont disposés en alternance, respectivement dans la direction longitudinale, des robots de manipulation (4, 6, HR1-HR3) et des robots de peinture (3, 5, AR1-AR3).

6. Installation de peinture selon l'une quelconque des revendications précédentes, **caractérisée en ce que** les guidages linéaires (1, 2) traversent plusieurs zones de peinture (22-26), sachant qu'au moins un robot de peinture (3, 5, AR1-AR3) et au moins un robot de manipulation (4, 6, HR1-HR3) sont disposés dans chacune des différentes zones de peinture (22-26).

7. Installation de peinture selon la revendication 6, **caractérisée en ce que** le robot de manipulation (4, 6, HR1-HR3) et le robot de peinture (3, 5, AR1-AR3) dans les différentes zones de peinture (22-26) sont montés respectivement sur des guidages linéaires (1, 2) différents.

8. Installation de peinture selon l'une quelconque des revendications précédentes, **caractérisée par** une voie de transport pour transporter l'objet à peindre (27) à travers l'installation de peinture, les guidages linéaires (28, 29) étant montés au-dessus de la voie de transport et/ou au-dessus de l'objet à peindre (27).

9. Installation de peinture selon l'une quelconque des revendications précédentes, **caractérisée en ce que** les guidages linéaires (28, 29) sont décalés vers le haut par rapport à un socle au moyen de pieds verticaux (30-33).

10. Installation de peinture selon la revendication 9, **caractérisée en ce que** l'espace situé dans la direction longitudinale entre les pieds verticaux (30-33) laisse passer le flux dans la direction latérale.

11. Installation de peinture selon l'une quelconque des revendications précédentes, **caractérisée par** un profilé de support (28, 29) en forme de caisson allongé avec plusieurs parois latérales, les guidages linéaires étant montés sur les parois latérales du profilé de support (28, 29).

12. Installation de peinture selon l'une quelconque des revendications précédentes, **caractérisée par** une voie de transport pour transporter l'objet à peindre (27) à travers l'installation de peinture, au moins deux guidages linéaires étant montés sur chacun des deux côtés de la voie de transport, tandis que chacun des guidages linéaires guide au moins l'un des robots de peinture et au moins l'un des robots de manipulation.

13. Installation de peinture selon la revendication 12, **caractérisée en ce que** les guidages linéaires sur les deux côtés de la voie de transport sont reliés l'un à l'autre par au moins une traverse (42, 43).

14. Installation de peinture selon la revendication 13, **caractérisée en ce que** les traverses (42, 43) sont disposées au-dessus de la voie de transport et/ou au-dessus de l'objet à peindre.

15. Installation de peinture selon l'une quelconque des revendications précédentes, **caractérisée en ce que** les guidages linéaires sont pré-assemblés au moins par paires.

16. Procédé de fonctionnement d'une installation de peinture,
a) avec au moins deux guidages linéaires (1, 2), le long desquels plusieurs robots de peinture (3, 5, AR1-AR3) et plusieurs robots de manipulation (4, 6, HR1-HR3) peuvent être déplacés dans la direction longitudinale,
b) au moins l'un des robots de peinture (3, 5, AR1-AR3) et au moins l'un des robots de manipulation (4, 6, HR1-HR3) étant guidés sur les deux guidages linéaires (1, 2),
c) au moins l'un des robots de peinture ou robots de manipulation (4, 6, HR1-HR3) de l'un des guidages linéaires (1, 2) pouvant passer dans la direction longitudinale le long d'au moins un des robots de peinture ou robots de manipulation (4, 6, HR1-HR3) de l'autre guidage linéaire (1, 2),
**caractérisé par**
d) plusieurs zones de peinture (22-26), qui sont disposées les unes derrière les autres dans la direction longitudinale des guidages linéaires (1, 2) et dans chacune desquelles est monté au moins un robot de manipulation (4, 6, HR1-HR3) et au moins un robot de peinture (3, 5, AR1-AR3),
e) une défaillance de l'un des robots de peinture (3, 5, AR1-AR3) dans une zone de peinture pouvant être compensée du fait qu'un robot de peinture (3, 5, AR1-AR3) d'une zone de peinture adjacente peut être déplacé dans la zone de peinture avec le robot de peinture (3, 5, AR1-AR3) en panne, et/ou
f) une défaillance de l'un des robots de manipulation (4, 6, HR1-HR3) dans une zone de peinture pouvant être compensée du fait qu'un robot de manipulation (4, 6, HR1-HR3) d'une zone de peinture adjacente peut être déplacé dans la zone de peinture avec le robot de manipulation (4, 6, HR1-HR3) en panne.
